**Europäisches Patentamt**

**European Patent Office**

**Office européen des brevets**

(11) Numéro de publication : **0 351 261 B1**

(12) **FASCICULE DE BREVET EUROPEEN**

(45) Date de publication du fascicule du brevet :
**08.04.92 Bulletin 92/15**

(21) Numéro de dépôt : **89401670.8**

(22) Date de dépôt : **14.06.89**

(51) Int. Cl.⁵ : **F16B 37/04**

(54) **Dispositif de fixation d'un élément sur une face externe d'un corps creux.**

(30) Priorité : **13.07.88 FR 8809585**

(43) Date de publication de la demande :
**17.01.90 Bulletin 90/03**

(45) Mention de la délivrance du brevet :
**08.04.92 Bulletin 92/15**

(84) Etats contractants désignés :
**DE GB IT**

(56) Documents cités :
**WO-A-85/02159**
**WO-A-87/01419**
**DE-U- 1 901 247**
**FR-A- 2 607 561**
**US-A- 2 429 833**
**US-E- 30 121**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Petiot, Jean-Paul**
**42, route d'Orsay**
**F-91460 Marcoussis (FR)**

(74) Mandataire : **Kohn, Philippe et al**
**c/o CABINET LAVOIX 2, place d'Estienne**
**d'Orves**
**F-75441 Paris Cédex 09 (FR)**

**Description**

La présente invention est relative à un dispositif de fixation d'un élément sur une face externe d'une paroi d'appui d'un corps creux, comportant une vis qui traverse une partie de l'élément et la paroi d'appui, et qui coopère avec un écrou en appui sur une face interne du corps creux, parallèle à la paroi d'appui, et un dispositif porte-écrou comportant un organe d'obturation de l'orifice d'introduction de l'écrou à l'intérieur du corps creux.

La fixation, par le dessous ou par l'intérieur, d'éléments mécaniques sur un plancher de véhicule automobile nécessite de prévoir des écrous de fixation à l'intérieur de l'habitacle du véhicule, le plus souvent au sein même d'un corps creux tel qu'un montant de la caisse. La disparité des cotes des divers éléments mécaniques nécessite de prévoir des montages des écrous autorisant un débattement de ceux-ci par rapport à la structure de caisse.

Afin de résoudre ce problème, on a déjà proposé de nombreuses structures consistant pour l'essentiel à agencer l'écrou prisonnier à l'intérieur d'une cage, ou d'une plaque d'écrou, par rapport à laquelle l'écrou possède un ou deux degrés de débattement.

Si de tels écrous en cage sont montés trop tôt dans la succession des étapes d'assemblage du véhicule, on constate qu'ils subissent ultérieurement les traitements prévus pour les caisses du véhicule, c'est-à-dire notamment la cataphorèse et éventuellement la peinture. A l'issue de ces opérations les écrous sont le plus souvent collés par rapport à leurs cages et leurs degrés de liberté ont ainsi disparu. L'opération d'assemblage finale nécessite dans ce cas de décoller les écrous avant l'opération de serrage des vis.

Il est également possible de mettre en place les écrous et leurs cages respectives après les opérations de traitement de la caisse du véhicule, par un trou du plancher, ou de l'élément de caisse correspondant, prévu à cet effet, puis à boucher le trou par un organe d'obturation. Cette deuxième solution décrite est représentée par FR-A-2607561 est avantageuse du point de vue de la qualité de l'assemblage puisqu'elle ne présente pas de risque de collage de l'écrou mais elle nécessite de nombreuses opérations successives, et n'est utilisable que si le corps creux est étroit.

La présente invention a pour but de proposer un dispositif de fixation qui s'apparente à la deuxième solution et qui permette notamment de réaliser l'opération de fixation en un minimum de mouvements, et en une seule opération qui consiste à la mise en place d'un organe d'obturation porte-écrou.

Dans ce but l'invention propose un dispositif de fixation d'un élément sur une face externe d'un corps creux, comportant une vis qui traverse une partie de l'élément et la paroi d'appui, et qui coopère avec un écrou en appui sur une face interne du corps creux, parallèle à la paroi d'appui, et un dispositif porte-écrou comportant un organe d'obturation de l'orifice d'introduction de l'écrou à l'intérieur du corps creux, ledit orifice étant formé dans une cloison du corps creux et ladite face interne comportant des moyens d'immobilisation en rotation de l'écrou, caractérisé en ce que ladite cloison est parallèle à la face d'appui et en ce que le dispositif porte-écrou comporte des moyens élastiques qui s'étendent parallèlement à l'axe d'assemblage de la vis et de l'écrou et qui sont susceptibles de se déformer élastiquement lors de l'opération de vissage pour permettre à l'écrou de se déplacer dans un plan sensiblement perpendiculaire audit axe de la vis, et notamment de pivoter autour de cet axe.

Selon d'autres caractéristiques de l'invention :
– ces moyens sont constitués par au moins deux bras élastiques du dispositif porte-écrou s'étendant axialement depuis l'organe d'obturation à l'intérieur du corps creux, et entre les extrémités libres desquels est maintenu l'écrou ;
– l'écrou est monté mobile axialement entre les bras ;
– l'écrou comporte une plaque de maintien rapportée sur l'une de ses faces transversales et qui comporte deux trous dans chacun desquels pénètre une des extrémités libres des bras ;
– chacune des extrémités libres des bras comporte un ergot de retenue axiale de la plaque de maintien ; et
– le dispositif de fixation comporte enfin un organe de butée qui s'étend axialement depuis l'organe d'obturation à l'intérieur du corps creux et dont la face d'extrémité est agencée, avec un jeu axial, en vis-à-vis de l'écrou.

D'autres caractéristiques et avantages de l'invention apparaîtront à la lecture de la description détaillée qui va suivre pour la compréhension de laquelle on se reportera aux dessins annexés dans lesquels :
– La figure 1 est une vue en perspective éclatée qui représente un premier mode de réalisation de l'organe d'obturation porte-écrou, de l'écrou, et des moyens d'immobilisation en rotation de ce dernier ;
– la figure 2 est une vue en coupe axiale du premier mode de réalisation du dispositif de fixation selon l'invention dans laquelle l'organe d'obturation est en position sur un corps creux en vis-à-vis duquel est représenté un organe mécanique que l'on désire fixer au moyen de ce dispositif de fixation ;
– la figure 3 est une vue en coupe axiale similaire à celle de la figure 2 d'un second mode de réalisation du dispositif de fixation selon l'invention ;
– la figure 4 est une vue en coupe axiale similaire à celle de la figure 3, un organe mécanique étant représenté fixé en position sur le corps creux ;

– la figure 5 est une vue de dessus montrant l'écrou et sa cage d'immobilisation en rotation ; et
– la figure 6 est une vue en section selon la ligne 6-6 de la figure 3.

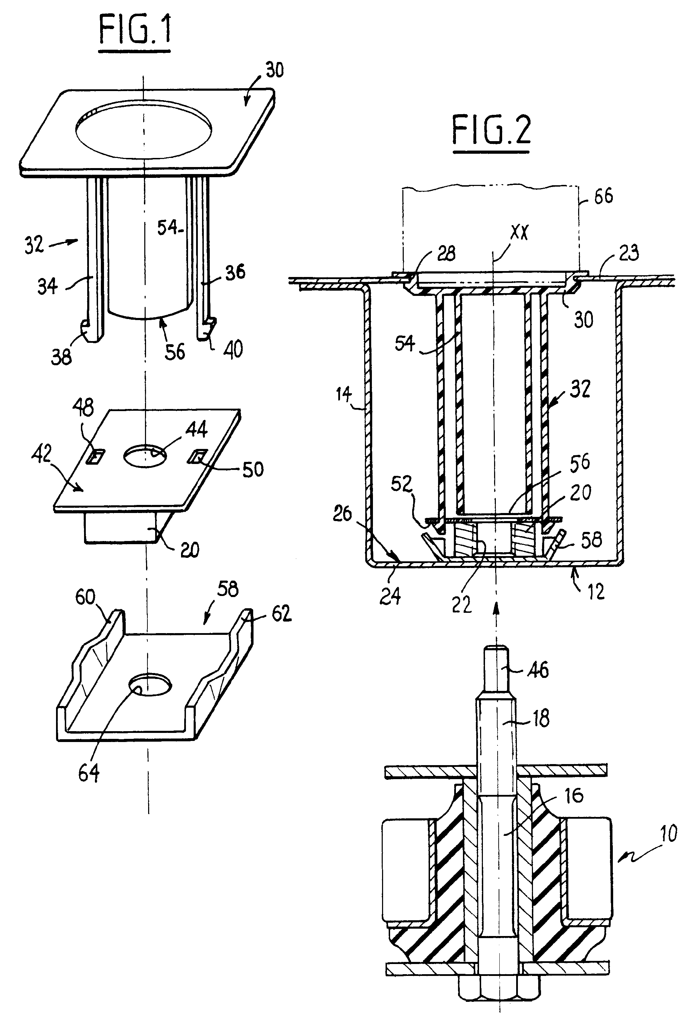

On a représenté aux figures 1 et 2 un dispositif de fixation d'un organe mécanique 10 sur une face externe 12 d'un corps creux 14 d'une partie de la caisse d'un véhicule automobile.

Le dispositif de fixation comprend une vis 16 dont la partie filetée 18 est prévue pour être vissée dans le trou taraudé 22 d'un écrou de fixation 20 disposé à l'intérieur du corps creux 14.

Le corps creux 14 est fermé par une cloison 23 qui est parallèle à la paroi d'appui 24 de l'organe mécanique sur le corps creux.

L'écrou 20 est prévu pour prendre appui par l'une de ses faces transversales sur la face interne 26 de la paroi 24 opposée à la face externe 12.

La cloison supérieure 23 comporte un orifice 28 permettant l'introduction et la mise en place de l'écrou 20 à l'intérieur du corps creux 14.

En position assemblée représentée à la figure 2, l'orifice 28 est obturé par un organe d'obturation 30 constitué par une plaque rectangulaire de profil complémentaire de celui de l'orifice 28 qui est emboîté élastiquement dans ce dernier.

L'organe d'obturation 30 se prolonge axialement, vers le bas en considérant la figure 2, à l'intérieur du corps 14 pour constituer un dispositif porte-écrou 32.

Dans le premier mode de réalisation représenté aux figures 1 et 2, le dispositif porte-écrou comprend deux bras parallèles 34 et 36 qui s'étendent parallèlement à l'axe X-X d'assemblage de la vis 18 et de l'écrou 20. Comme l'organe d'obturation 30, les bras 34 et 36 sont réalisés en matière plastique et sont venus de matière avec celui-ci de façon à être déformables élastiquement selon des directions transversales, c'est-à-dire s'étendant dans un plan sensiblement perpendiculaire à l'axe X-X.

Les deux bras 34 et 36 sont disposés symétriquement de part et d'autre de l'axe X-X et comportent chacun à leur extrémité un ergot de retenue axiale, respectivement 38 et 40, pour assurer la retenue de l'écrou lors de l'introduction du dispositif porte-écrou 32 dans le corps creux 14.

L'écrou 20 est muni sur sa face supérieure transversale d'une plaque rapportée de maintien 42.

Outre un trou 44 permettant le passage de l'extrémité 46 de la vis 16, la plaque de maintien 42 comporte deux trous rectangulaires 48 et 50 permettant l'introduction des ergots 38 et 40.

Dans la position représentée à la figure 2, les deux bras 34 et 36 sont légèrement comprimés en direction de l'axe de manière à ce que les faces supérieures des ergots 38 et 40 soient en regard de la face inférieure 52 de la plaque de maintien 42.

Le dispositif porte-écrou 32 comporte également un organe de butée axiale 54, coaxial à l'axe X-X, qui s'étend depuis l'organe d'obturation 30 vers l'intérieur du corps creux 14 de façon à ce que sa face inférieure libre d'extrémité 56 soit en vis-à-vis de la plaque 42 de maintien de l'écrou 20.

Afin d'empêcher la rotation de l'écrou 20 lors de l'opération de vissage, la face interne 26 de la paroi d'appui 24 est munie de moyens 58 d'immobilisation en rotation de l'écrou.

Ces moyens 58 sont constitués par une cage à deux parois latérales 60 et 62, qui comporte un trou central 64 pour permettre le passage de la vis 16 et qui est rapportée, par exemple par soudage, sur la face interne 26 de la paroi d'appui 24.

L'écartement transversal des parois latérales 60 et 62 ainsi que leur hauteur sont choisis de façon à immobiliser l'écrou 20 en rotation autour de l'axe X-X lors de l'opération de vissage tout en permettant son débattement dans un plan transversal.

Le dispositif de fixation qui vient d'être décrit peut être utilisé de la manière suivante.

Après avoir mis en place l'écrou 20 au moyen de sa plaque de maintien 42 sur les deux bras 34 et 36 du dispositif porte-écrou 32, l'utilisateur n'a plus qu'à mettre en place, par exemple au moyen d'une tête de préhension de robot 66, l'ensemble formé par le porte-écrou 32 et par l'écrou 20 à l'intérieur du corps creux 14. L'organe d'obturation est conformé extérieurement pour s'adapter à la tête 66.

Dans cette position représentée à la partie haute de la figure 2, l'écrou 20 est dans sa cage d'immobilisation en rotation 58 et en appui sur la face interne 26 de la paroi d'appui 24.

L'utilisateur n'a plus qu'à introduire et à visser progressivement la vis 16 de façon à venir fixer l'organe mécanique 10 par rapport au corps creux 14.

Lors de l'opération de vissage, l'écrou 20, est empêché de s'échapper axialement vers le haut par la surface libre d'extrémité 56 de l'organe de butée 54. Il est prévu un léger jeu axial entre la face libre d'extrémité 56 et la face supérieure de la plaque de maintien 42 afin de faciliter les opérations de vissage.

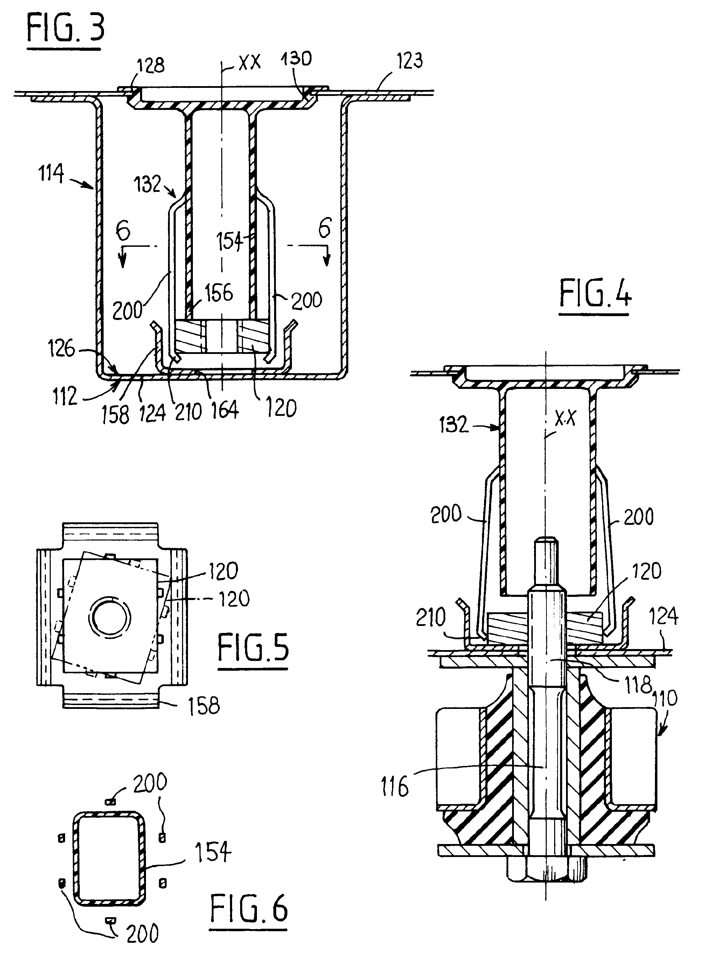

On décrira maintenant un second mode de réalisation d'un dispositif de fixation selon l'invention qui est représenté aux figures 3 à 6. Sur ces figures les organes identiques ou similaires à ceux des figures 1 et 2 sont désignés par les mêmes chiffres de référence augmentés de 100.

Par rapport au premier mode de réalisation, ce second mode de réalisation diffère essentiellement par le nombre et la forme des bras de maintien de l'écrou 20.

Les bras 200 sont ici au nombre de 6 répartis autour de l'organe axial de butée 154 qui est ici un organe tubulaire de section rectangulaire.

Les extrémités des bras 200 comportent des portions recourbées 210 qui servent à retenir axialement l'écrou 120 lors de l'opération d'introduction et de mise en place du porte-écrou 132.

Dans la position représentée à la figure 3, les bras axiaux 200 enserrent l'écrou 120 du fait de leur élasticité propre qui a permis la mise en place préalable de l'écrou 120 entre les bras 200 et en appui contre la face libre d'extrémité 156 de l'organe tubulaire de butée 154.

Comme dans le premier mode de réalisation, les bras 200 possèdent une élasticité suffisante pour permettre à l'écrou 120 de se déplacer dans un plan parallèle à celui de la paroi d'appui 124 lors de l'opération d'introduction de la vis 118 et notamment de pivoter légèrement autour de l'axe X-X comme cela est indiqué en pointillés à la figure 5, pour venir en butée contre les parois de la cage 158.

Dans la position assemblée représentée à la figure 4, on constate que, lors de l'opération de vissage, l'écrou 120 est descendu progressivement en direction de la paroi d'appui 124 jusqu'à ce que sa face transversale inférieure vienne en appui dans la la cage d'immobilisation en rotation 158.

Afin de permettre ce mouvement, les bras 200 se sont écartés progressivement vers l'extérieur par rapport à l'axe X-X, l'écrou 120 demeurant néanmoins maintenu entre les extrémités recourbées 210 des bras 200.

Les opérations de fixation à l'aide du dispositif de fixation représenté aux figures 3 à 6 sont identiques à celles qui ont été décrites pour le premier mode de réalisation représenté aux figures 1 et 2.

## Revendications

1. Dispositif de fixation d'un élément (10, 110) sur une face externe (12, 112) d'un corps creux (14, 114), comportant une vis (16, 116) qui traverse une partie de l'élément et la paroi d'appui, et qui coopère avec un écrou (20, 120) en appui sur une face interne (26, 126) du corps creux, parallèle à la paroi d'appui, et un dispositif porte-écrou (32, 132) comportant un organe d'obturation (30, 130) de l'orifice (28, 128) d'introduction de l'écrou à l'intérieur du corps creux, ledit orifice (28, 128) étant formé dans une cloison (23, 123) du corps creux et ladite face interne (26, 126) comportant des moyens (58, 158) d'immobilisation en rotation de l'écrou, caractérisé en ce que ladite cloison (23, 123) est parallèle à la face d'appui et en ce que le dispositif porte-écrou (32, 132) comporte des moyens élastiques (34, 36, 200) qui s'étendent parallèlement à l'axe (X-X) d'assemblage de la vis (16, 116) et de l'écrou (20, 120) et qui sont susceptibles de se déformer élastiquement lors de l'opération de vissage pour permettre à l'écrou (20, 120) de se déplacer dans un plan sensiblement perpendiculaire audit axe (X-X) de la vis, et notamment de pivoter autour de cet axe (X-X).

2. Dispositif de fixation selon la revendication 1, caractérisé en ce que lesdits moyens sont constitués par au moins deux bras élastiques (34, 36, 200) du dispositif porte-écrou (32, 132) s'étendant axialement depuis l'organe d'obturation (30, 130) à l'intérieur du corps creux, et entre les extrémités libres desquels est maintenu l'écrou.

3. Dispositif de fixation selon la revendication 2, caractérisé en ce que l'écrou est monté mobile axialement entre lesdits bras.

4. Dispositif de fixation selon la revendication 3, caractérisé en ce que l'écrou (20) comporte une plaque de maintien (42) rapportée sur une de ses faces transversales et qui comporte deux trous (48, 50) dans chacun desquels pénètre une desdites extrémités libres (38, 40).

5. Dispositif de fixation selon la revendication 4, caractérisé en ce que chacune desdites extrémités libres comporte un ergot de retenue axiale (38, 40) de la plaque de maintien (42).

6. Dispositif de fixation selon l'une quelconque des revendications précédentes, caractérisé en ce qu'il comporte un organe de butée (54, 154) qui s'étend axialement depuis l'organe d'obturation (30, 130) à l'intérieur du corps creux et dont la face d'extrémité (56, 156) est agencée, avec un jeu axial, en vis-à-vis de l'écrou (20, 120).

7. Dispositif de fixation selon l'une quelconque des revendications précédentes, caractérisé en ce que l'organe d'obturation est conformé pour s'adapter à la tête de préhension d'un robot.

## Patentansprüche

1. Vorrichtung zur Befestigung eines Elements (10, 110) an einer Außenfläche (12, 112) eines Hohlkörpers (14, 114), mit einer Schraube (16, 116), welche einen Teil des Elements und die Anlagewand durchsetzt und welche mit einer Mutter (20, 120) zusammenwirkt, die an einer Innenfläche (26, 126) des Hohlkörpers, parallel zur Anlagewand, anliegt, und einer Mutternhaltervorrichtung (32, 132), welche ein Verschließelement (30, 130) für die Öffnung (28, 128) zum Einführen der Mutter ins Innere des Hohlkörpers aufweist, wobei die Öffnung (28, 128) in einer Trennwand (23, 123) des Hohlkörpers ausgebildet ist und die Innenfläche (26, 126) Mittel (58, 158) zur Festlegung der Mutter in Drehrichtung aufweist, dadurch gekennzeichnet, daß die Trennwand (23, 123) parallel zur Anlagefläche ist und daß die Mutternhaltervorrichtung (32, 132) elastische Mittel (34, 36, 200) aufweist, die sich parallel zur Montageachse (X-X) der Schraube (16, 116) und der Mutter (20, 120) erstrecken und sich beim Schraubvorgang elastisch verformen können, so daß die Mutter (20, 120) in einer zur Achse (X-X) der Schraube im wesentlichen senkrechten Ebene sich verschieben und insbesondere um diese Achse (X-X) kippen kann.

2. Befestigungsvorrichtung nach Anspruch 1, dadurch gekennzeichnet, daß die Mittel durch wenigstens zwei elastische Arme (34, 36, 200) der Mutternhaltervorrichtung (32, 132) gebildet sind, die sich vom Verschließelement (30, 130) axial ins Innere des Hohlkörpers erstrecken und zwischen deren freien Enden die Mutter gehalten wird.

3. Befestigungsvorrichtung nach Anspruch 2, dadurch gekennzeichnet, daß die Mutter axial beweglich zwischen den Armen angebracht ist.

4. Befestigungsvorrichtung nach Anspruch 3, dadurch gekennzeichnet, daß die Mutter (20) eine Halteplatte (42) aufweist, welche an einer ihrer Querflächen angesetzt ist und zwei Löcher (48, 50) aufweist, in welche jeweils eines der freien Enden (38, 40) eindringt.

5. Befestigungsvorrichtung nach Anspruch 4, dadurch gekennzeichnet, daß jedes der freien Enden eine Nase (38, 40) zum axialen Rückhalten der Halteplatte (42) aufweist.

6. Befestigungsvorrichtung nach irgendeinem der vorstehenden Ansprüche, dadurch gekennzeichnet, daß sie ein Anschlagselement (54, 154) aufweist, welches sich axial vom Verschließelement (30, 130) ins Innere des Hohlkörpers erstreckt und dessen Endfläche (56, 156), mit axialem Spiel, der Mutter (20, 120) gegenüberliegend angeordnet ist.

7. Befestigungsvorrichtung nach irgendeinem der vorstehenden Ansprüche, dadurch gekennzeichnet, daß das Verschließelement so ausgebildet ist, daß es dem Greifkopf eines Roboters angepaßt ist.

## Claims

1. Means for the attachment of a member (10, 110) on the outer face (12, 112) of a hollow body (14, 114), comprising a bolt (16, 116) which passes through a part of the member and the supporting wall, and which acts in concert with a nut (20, 120) which bears against an inner face (26, 126) of the hollow body parallel to the supporting wall, and nut-bearing means (32, 132) comprising a member (30, 130) which obstructs the opening (28, 128) through which the nut is introduced within the hollow body, the said opening (28, 128) being formed in a partition member (23, 123) of the hollow body and the said inner face (26, 126) comprising means (58, 158) for immobilising rotation of the nut, characterised in that the said partition member (23, 123) is parallel to the supporting face and in that the nut-bearing member (32, 132) comprises elastic means (34, 36, 200) which extend parallel to the axis (X-X) of assembly of the bolt (16, 116) and nut (20, 120) and which are capable of deforming elastically when the former are screwed up to allow the nut (20, 120) to move in a plane substantially perpendicular to the said axis (X-X) of the bolt, and in particular to pivot about this axis (X-X).

2. Means of attachment according to claim 1, characterised in that the said means consists of at least two elastic arms (34, 36, 200) of the nut-bearing means (32, 132) which extend axially from the obstructing member (30, 130) within the hollow body, between the free ends of which the nut is held.

3. Means of attachment according to claim 2, characterised in that the nut is mounted with axial freedom of movement between the said arms.

4. Means of attachment according to claim 3, characterised in that the nut (20) incorporates a holding plate (42) applied to one of its transverse faces which incorporates two holes (48, 50) each of which is penetrated by one of the said free ends (38, 40).

5. Means of attachment according to claim 4, characterised in that each of the said free ends comprises an axial pin (38, 40) retaining the holding plate (42).

6. Means of attachment according to any one of the foregoing claims, characterised in that it incorporates a stop member (54, 154) which extends axially from the obstructing member (30, 130) within the hollow body, the end face whereof (56, 156) is arranged to face the nut (20, 120) with axial play.

7. Means of attachment according to any one of the foregoing claims, characterised in that the obstructing member is shaped so as to fit the gripping head of a robot.

## FIG.1

30

32

34

54

36

38 56 40

48

42 44

50

20

58

60

62

64

## FIG.2

66

28 XX 23

14 54 30

32

26 52 56 20

24 22 58 12

46

18

16

10

FIG. 3

FIG.4

FIG.5

FIG.6